# EUROPEAN PATENT SPECIFICATION

(11) **EP 1 296 506 B1**
(45) Date of publication and mention of the grant of the patent: **29.03.2006**
(21) Application number: 02078701.6
(22) Date of filing: 09.09.2002
(51) Int. Cl.: H04N 1/00, H04N 1/393

(54) **Selecting an image bearing product requiring a particular size image converted from a high resolution digital image**
Auswahl eines bildtragenden Produktes dass ein Bild einer bestimmten Grösse benötigt, das durch Konversion eines hochauflösenden digitalen Bildes gewonnen wird
Sélection d'un produit portant une image requérant une image d'une taille particulière convertie d'une image numérique haute résolution

(30) Priority: 21.09.2001 US 960678
(43) Date of publication of application: 26.03.2003
(73) Proprietor: EASTMAN KODAK COMPANY, Rochester, New York 14650 (US)
(72) Inventor: Fredlund, John Randall, Rochester, New York 14650-2201 (US); Parulski, Kenneth Alan, Rochester, New York 14650-2201 (US)
(74) Representative: Weber, Etienne Nicolas

(56) References cited:
- EP-A- 1 132 877
- US-A- 5 666 215
- US-A- 6 147 770

## Description

The present invention relates to a method for a user to select a particular image bearing product, which requires a particular size digital image.

The transfer of digital images from a user to a service provider for storage and printing is becoming more popular and more important. Typically, a digital camera user takes a plurality of digital images, which are stored on a removable memory card. These images can be transferred from the memory card and stored, for example, on a hard drive, recordable CD, or other non-volatile memory associated with the user's computer. While these stored images can be printed on a local printer, such as an ink jet printer, it is often simpler and less expensive for the user to have the images printed by a service provider. When services are ordered from a service provider, the images need to be uploaded using a channel such as the Internet, and then printed.

Digital images from scanned photographic film can be uploaded to a service provider for viewing, as described in commonly assigned US-A-5,666,215. Using a web browser, a group of these digital images, in low resolution form, can be viewed and selected for printing, using the original, higher resolution images, for example using the Kodak Photonet Service. The user can select the size of each print to be produced, and the quantity of prints to be made from each image. The user can also select types of products other than prints. Album pages can be produced from digital images by arranging numerous images on the same page, as described in commonly assigned US-A-6,004,061. These album pages can be customized in terms of the size and arrangement of images on the page, the size and finish of the album pages, and the background color or patterns used. Other image bearing products may also be provided, such as image bearing mugs and t-shirts. Each of these image bearing products can have different resolution requirements (for example different numbers of pixels in the image file) for optimum printing. Limits in printing processes (for example ink jet, thermal dye sublimation, digital silver halide printing) and output formats (for example output image size) often limit the need for high spatial resolution and high bit depth (for example a large number of bits per pixel). Sending more data than necessary for printing extends transmission times and costs without benefit to the user or the service provider.

EP A-1 132 877 discloses a method of selecting an image bearing product that requires a particular size of an image such as print sizes, and which producer an order label or envelope indicating the selections US-A-6 147 770 discloses a scanner connected to a host computer, the size and the resolution of the images scanned and output by the scanner can be controlled by information sent from the host computer regarding the printing resolution which is available.

It is an object of the present invention to permit a user to select from a service provider a particular image bearing product that requires a particular size digital image.

This object is achieved by a method of selecting an image bearing product as in the appended claims.

### ADVANTAGES

It is an advantage of the present invention to provide a method for minimizing the data transferred from a user to a service provider to produce image bearing products, which require different sized digital images.

It is a further advantage to minimize the transfer time from the user to a service provider.

It is a further advantage to automatically convert the resolution required for a selected image bearing product before transfer of such converted digital image to the service provider.
FIG. 1 depicts a block diagram of a system that provides image bearing products over a network such as the Internet;
FIG. 2 is a flow diagram of the method practiced by the method of FIG. 1;
FIG. 3 depicts a user interface screen, which permits a user to select from a plurality of image bearing products;
FIG. 4 depicts still further image bearing products including album page options that can be provided by the system of FIG. 1;
FIGS. 5A & 5B are listings depicting service account information including images and corresponding image bearing products to be produced;
FIG. 6 is a graphical user interface screen to enable a user to select image bearing products to be produced; and
FIG. 7 is a graphical user interface screen to enable a user to select images to be uploaded.

The present invention provides an effective method for a providing efficient transfer of images from a remote location to a service provider. The images may be uploaded to the service provider over a channel. In the present invention, the size of the image to be transmitted is determined automatically by the service provider upon the user's selection of the desired image bearing product. If the size of the user's image is larger than required for the selected product, the image is automatically converted to the required size, prior to transmission from the remote location to the service provider.

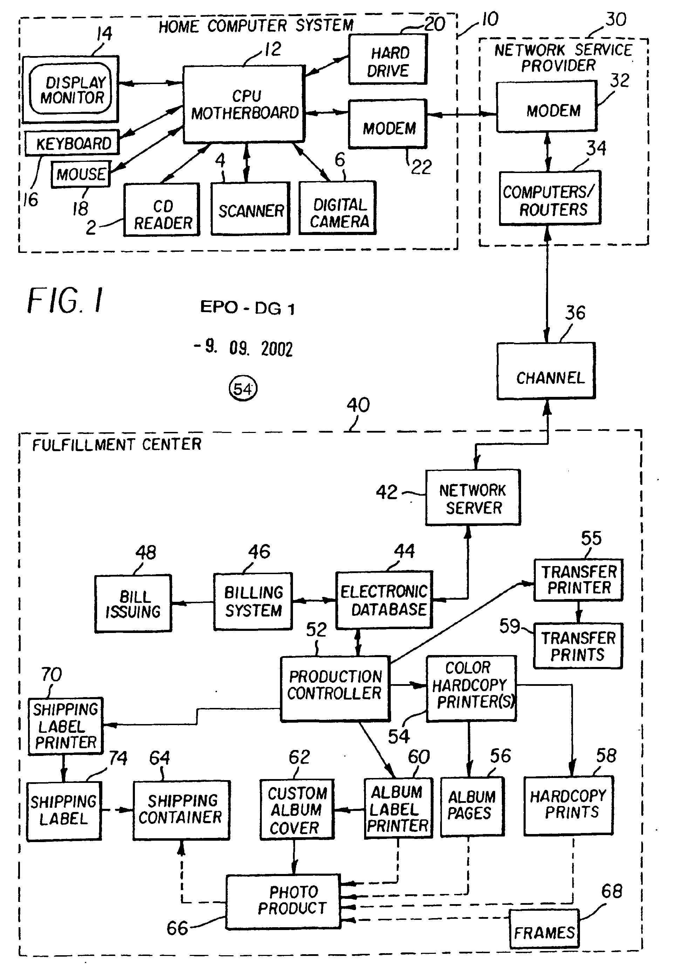

As shown in FIG. 1, the system includes a home computer system (with associated peripherals) 10 located at the customer location (for example, the user's home), which is a first location. The home computer system 10 also includes equipment located at a network service provider 30, such as an Internet service provider (ISP), which communicates with the home computer system 10 to provide a network connection for the customer to a channel 36, such as the Internet. The system further includes a fulfillment center 40 which communicates with the home computer system 10 via the ISP 30 to perform the steps of selecting image bearing products (also called photo products), transferring images, creating and shipping a photo product 66, and providing billing. The fulfillment center 40 includes an electronic database 44, and is located at a second location, typically in another city, remote from the user's computer 10. It is understood that a system such as a game console, dedicated Internet appliance, set top box, or retail kiosk may be substituted for the home computer system 10.

The various portions of the fulfillment center 40 can be located in a single building or complex of adjacent buildings, or can be geographically dispersed over several sites in different cities or even different continents. For example, the electronic database 44 and the album production controller 52 can be provided by computers located in different cities and interconnected via a suitable digital communications network, such as the Internet. Furthermore, the electronic database 44 can itself be distributed over several computers in several different locations.

The home computer system 10, which can be, for example, a Dell Dimension XPS M200, includes a CPU motherboard 12, using, for example, a Pentium 200 MHz MMX processor as well as RAM memory. The CPU motherboard 12 executes software stored on a hard drive 20, for example, the well known Windows 98 operating system software and the Internet Explorer web browser software, both provided by Microsoft Corp. of Redmond, WA. The CPU motherboard 12 is coupled to a display monitor 14 and a keyboard 16. A mouse 18 permits the customer to readily communicate with the CPU motherboard 12. The customer's computer 10 also includes a dial-in modem 22 for communicating with the ISP 30 in order to connect to a channel 36, such as the Internet.

The CPU motherboard 12 communicates with a color scanner 4, such as a Microtek ScanMaker E6, which can scan color photographs (not shown). The CPU motherboard 12 stores high resolution digital images of the photographs on the hard drive 20. The CPU motherboard 12 also communicates with a CD reader 2. The CD reader 2 can be used to input digital images from a CD-R disc, such as a Kodak PictureCD (not shown). The CPU motherboard 12 also communicates with a digital camera 6 via a suitable interface, such as the well known USB or RS-232 serial interfaces. The digital camera 6, for example a Kodak DC280 Zoom digital camera, can be used to provide high resolution digital images. The high resolution digital images provided by the CD reader 2, scanner 4, and digital camera 6 can be converted to smaller sized digital images appropriate for use in producing various image bearing products, and the smaller sized digital image files can be uploaded from the home computer system 10 to the fulfillment center 40 via ISP 30 and channel 36.

The ISP 30, for example, Earthlink Network, Inc. of Pasadena, CA, includes banks of modems 32, one of which is connected to communicate with the modem 22 of the customer's computer 10. The modem 32 in turn communicates with computers/routers 34 in order to provide a connection to the channel 36 using equipment and techniques well known to those skilled in the art.

The fulfillment center 40 is connected to the channel 36, such as the Internet, by a network server 42, such as an Internet server, which is comprised of one or more computers and associated peripherals. The fulfillment center 40 is normally owned or controlled by the service provider. The electronic database 44 provides information describing numerous image bearing product options, including different print sizes, different output formats such as mugs and t-shirts, and printing a group of digital images onto album pages. The electronic database 44 can be contained on the same computer as the network server 42, or can utilize a separate computer, or can be distributed over several computers at the same physical site, or at different sites.

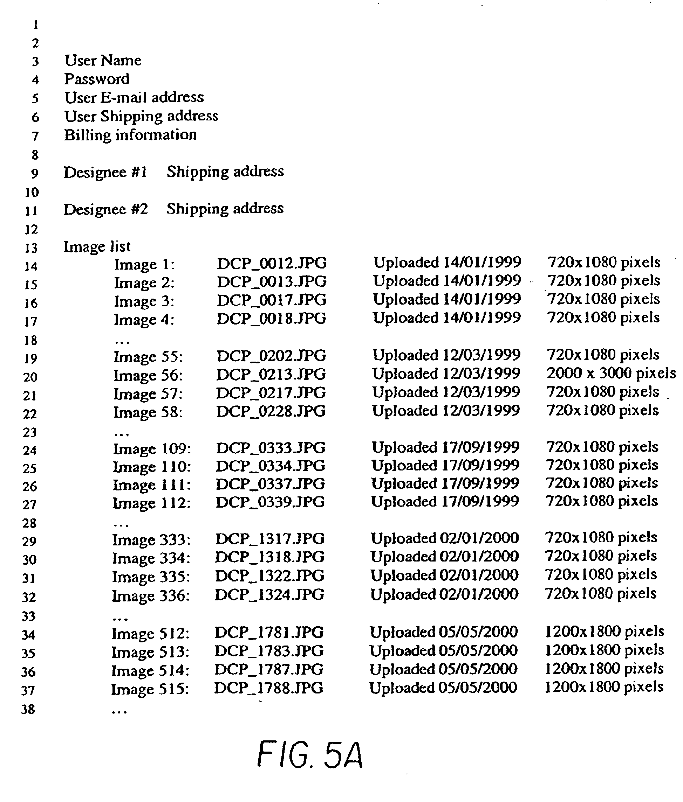

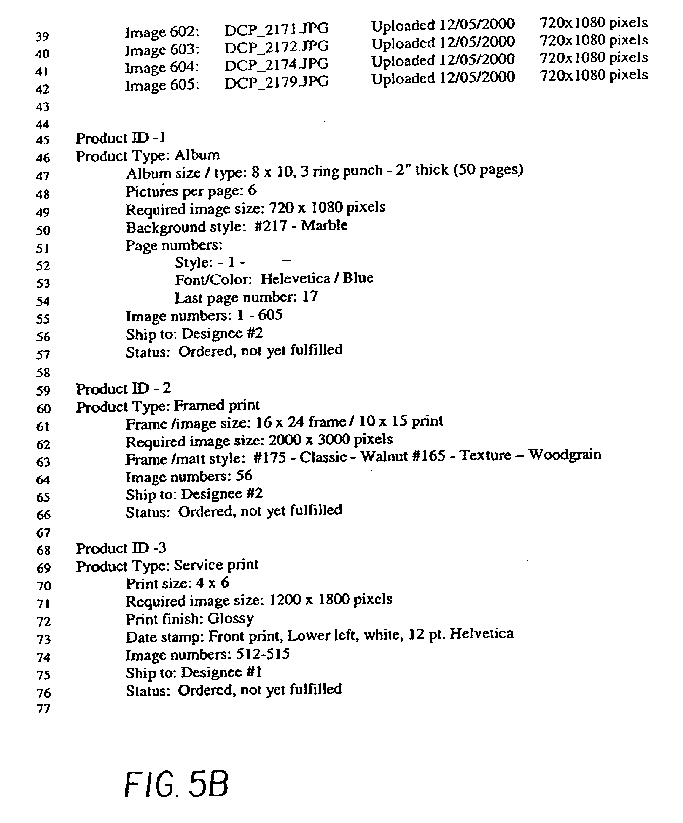

The electronic database 44 includes information describing different features of the albums and other photo products 66 that can be selected and customized by the customer at the remote location, using the customer's computer 10. The electronic database 44 also includes information describing photo product options, for example album features such as providing various background colors or textures, page numbers, page captions, image captions, and so forth The album pages can be bound in a cover, or can include holes to permit the pages to be inserted into a standard binder, such as a three-ring binder. These album feature options can be demonstrated via software programs, for example, JAVA applets, MPEG or QuickTime movies, or Shockwave files, which depict the functionality of features that the customer can choose. The electronic database 44 also stores the file size requirements for each type and size of image-bearing products that can be ordered by the user, as will be described later in reference to FIGS. 5A & 5B.

A plurality of image bearing products are presented to the user for selection. When an image bearing product 66 is selected by the user, the electronic database 44 communicates with the user's computer to specify the size of the digital image file needed to produce a high quality image reproduction for the selected product. This is preferably done by specifying the number of pixels per line and total lines to be used to upload the image, and the bit depth. An application running on the user's computer then prepares the image for transmission by converting (for example resizing) the image to meet the requirements for the selected image bearing product. The resized image is then compressed in such a manner so as to insure that the quality of the selected product will be limited by the capabilities of the service provider's printer and process, and not by the image compression. The application may also determine that the entire image will be sent if the limit to the quality of the selected product is the user's image file itself (for example if the user's image file is smaller than the required size for the image-bearing product). In this situation, a warning of unsatisfactory image quality may be provided to the user, as described in commonly assigned US-A-6,018,397.

If the same image is to be used in several image bearing products, the requirements for the most demanding product (for example the product requiring the largest file size) are used to upload this particular image.

As shown in FIG. 1, the electronic database 44 is connected to production controller 52. The production controller 52 controls one or more color hardcopy printers 54, which can produce album pages 56 or separate hardcopy prints 58. The hardcopy prints can be placed in frames 68. The production controller 52 can optionally be connected to transfer printer 55 for producing transfer prints 59 that can be used to produce t-shirts, coffee mugs, and so forth incorporating one or more images uploaded by the user. The production controller 52 is also connected to an album label printer 60 which produces labels that can be attached to a standard album cover to provide custom album cover 62.

The production controller 52 also controls a shipping label printer 70 to produce a shipping label 74. The shipping label 74 is attached to a shipping container 64 (for example, a cardboard box containing packing material) that contains and protects the image bearing product 66 during shipment (for example, via air express mail, ground carrier, and so forth) to the customer or the customer's designee.

On a regular basis (for example monthly) or alternatively whenever a photo product 66 is purchased by the user, the electronic database 44 communicates with a billing system 46 to verify that the payment identifier (for example, credit card or debit card number) provided by the customer is valid, and to debit the account for the purchase or the monthly service fee for providing information to the user and storing user images. As shown in block 48, the bill is issued. The customer's account that is debited can, of course, be located at a remote financial institution.

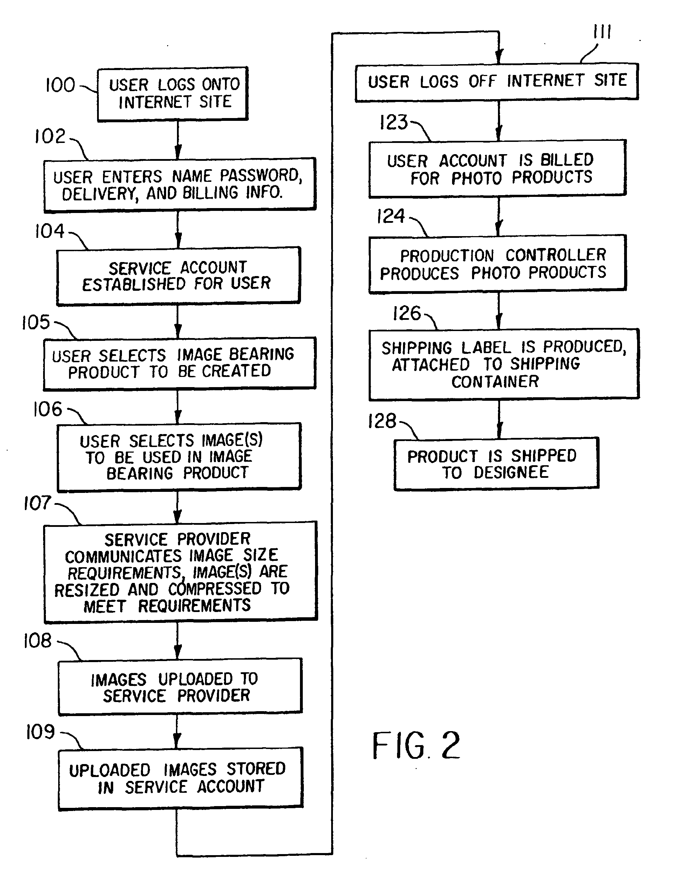

Turning now to FIG. 2, there is shown a flow diagram of a typical method for effectively transferring images from a user to a service provider to produce image bearing products 66, such as prints, albums, mugs, t-shirts, and so forth As shown in block 100, the user (that is the customer), using a digital communication network, logs onto the channel 36, which can be the Internet. The user can, of course, use a service provider, such as the ISP 30, to gain access to the channel 36. The ISP 30 uses an address, such as an Internet protocol (IP) address, to establish a connection between the user's computer 10 and a product provider or seller who owns or controls the fulfillment center 40.

In block 102, the user enters his name, selects a password, and provides delivery and billing information. This information identifies the user and one or more designees (for example a person to whom the image bearing product 66 should be shipped, which can of course be the user). It includes addresses of both the user and the user's designees. The user also identifies an account to be debited to pay for the photo product(s) to be purchased. Often this will be a credit card having a payment identifier that specifies the account of the customer to be charged or debited. Frequently, this will be in a financial institution. The payment identifier can be a credit card number that specifies a particular credit card account. As used in this specification, a credit card will also include a debit card.

In block 104, a user service account is established for the user. The information stored in the service account includes the information entered by the user in block 102. FIGS. 5A & 5B provide an example of the service account information. The billing information (for example credit card number) and other sensitive information provided in the service account can be encrypted to prevent discovery and unauthorized use. The service account information is preferably stored as part of the electronic database 44 in the fulfillment center 40. Alternatively, it is possible for some of the service account information to be stored in the customer's computer 10, for example on the hard drive 20, and communicated to the fulfillment center 40 as required

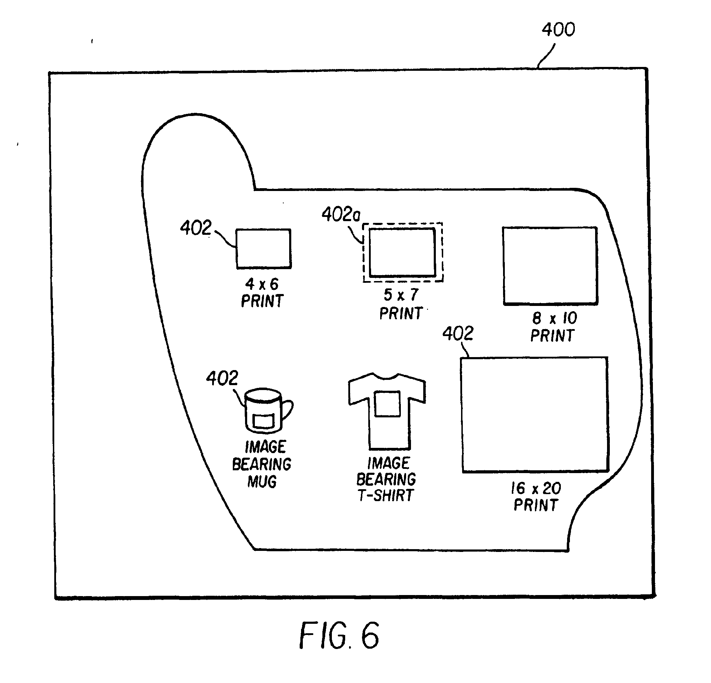

In block 105 of FIG. 2, the customer selects at least one image bearing product to be created by the service provider. This may be done by transferring, from the fulfillment center 40 to the home computer system 10, a plurality of selection options for image bearing products from the service provider, and then selecting a product from the available choices. In a preferred embodiment, the CPU 12 displays on the display monitor 14 a display screen 400 as shown in FIG. 6. The display screen 400 includes a two-dimensional array of thumbnail images 402 of image bearing products, and the user selects at least one image bearing product The user selects the desired image bearing product by clicking the mouse 18 on the thumbnail image 402a FIG. 6 shows that thumbnail image 402a (outlined) has been selected.

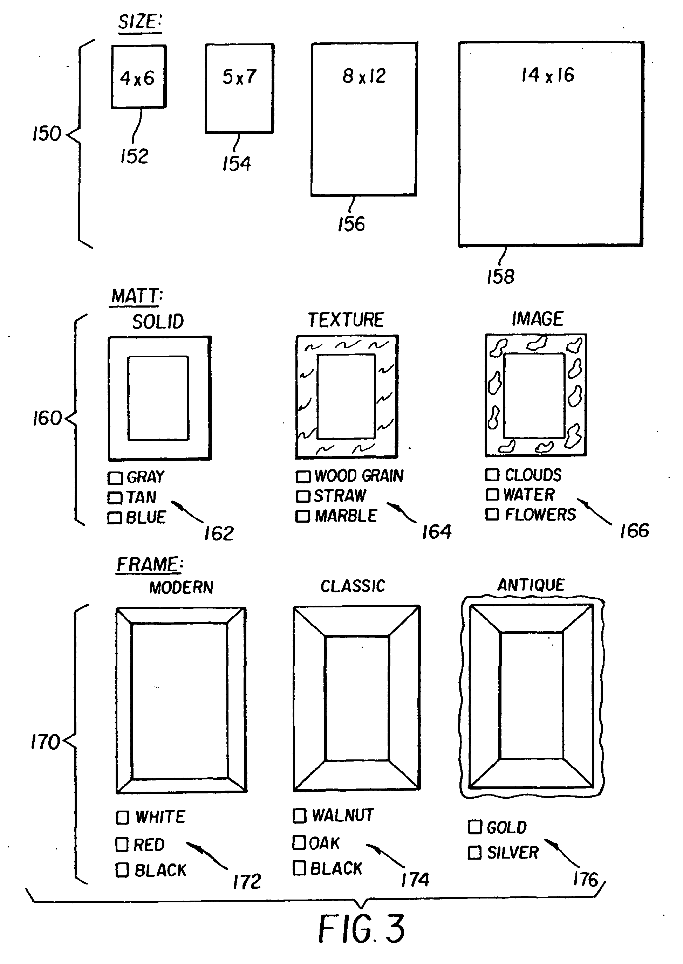

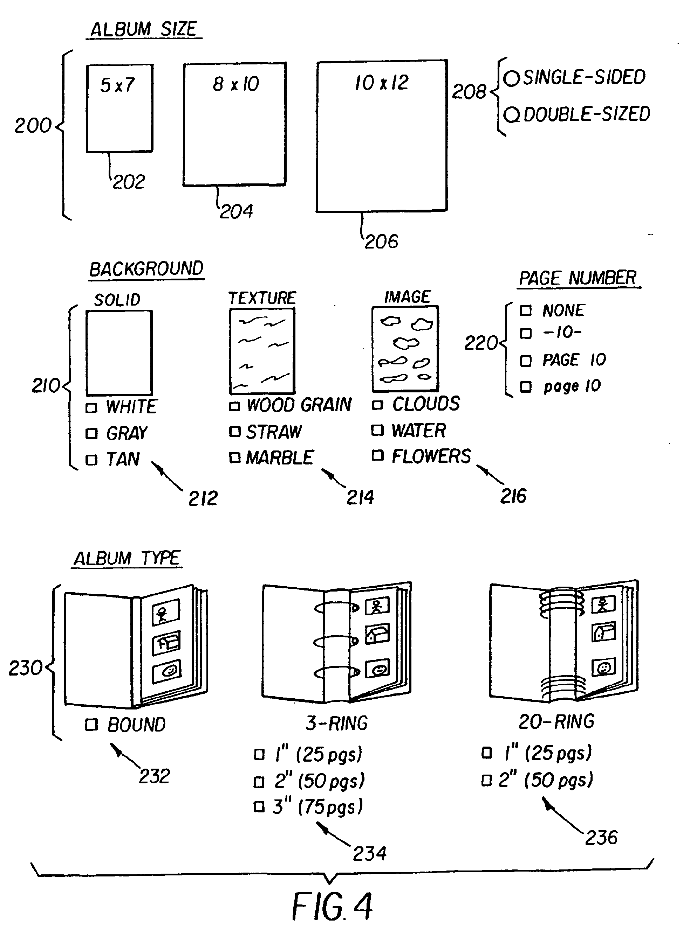

The thumbnail images 402 consist of image bearing products 66 that are available for customization and purchase, such as standard service prints, framed hardcopy prints as depicted in FIG. 3, and customized photo albums as depicted in FIG. 4. The options for standard prints include providing the prints in various sizes (for example 3" x 5", 4" x 6", and so forth, where 1" = 25 A mm). The fulfillment center can also provide a menu of customizable features for the type of product selected by the user. The user selects what type of products (for example standard service prints, framed hardcopy prints, customized photo albums, mug, t-shirt, and so forth) to purchase. The user can also select preferred features to customize the selected image bearing product from a list of options.

FIG. 3 depicts framed options that can be selected by the user. The options include selecting the size of the print from a plurality of print sizes 150, including 4" x 6" size 152, 5" x 7" size 154, 8" x 10" size 156, and 14" x 16" size 158. The user selects the size by selecting the appropriate print size icon (for example icon 152, 14, 156, or 158). The options also include selecting a matte style from a plurality of styles 160, including solid mattes 162 in gray, tan, and blue, textured mattes 164 in woodgrain, straw, or marble, and background image mattes 166 including clouds, water, or flowers. The user selects the matte by selecting the appropriate radio button (for example one of buttons 162, 164, or 166) for their preferred matte style. The user then selects a picture frame style from a variety of styles 170, including modem styles 172 in white, red, and black, classic styles 174 in walnut, oak, and black, and antique styles 176 in gold and silver. The user selects the picture frame style by selecting the appropriate radio button (for example one of buttons 172, 174, or 176) for their preferred frame style. Of course, many more size, matte, and frame options can be presented to the user using various types displays, such as pull-down menus, scroll bars, and so forth The selected combination of print size, matte style and frame style is then presented to the user. For example, if the user selects a classic walnut frame with a texture wood grain matte, the Internet server 42 would present to the user an image depicting this combination for the user to review.

FIG. 4 depicts album options that can be selected by the user. The options include selecting the size of the album from a plurality of sizes 200, including 5" x 7" size 202, 8" x 10" size 204, and 10" x 12" size 206. The user selects the size by selecting the appropriate print size icon (for example icon 202, 204, or 206). The options also include using radio buttons 208 to select single-sided pages (for example print only on 1 side of the album page) or double-sided pages. The options further include selecting a preferred background style from a plurality of styles 210, including solid backgrounds 212 in white, gray, or tan, textured backgrounds 214 in wood grain, straw, or marble, and background images 216 including clouds, water, or flowers. The user selects the background style by selecting the appropriate radio button (for example one of buttons 212, 214, or 216). The user then selects whether to include a page number from a plurality of options using radio buttons 220. The options include no page numbers and several different styles of page numbers. The color, size, and font of the text used for the page numbers and image captions could also be selected using a separate menu (not shown). Finally, the user selects an album type from a plurality of album types 230. The album type is selected by the user by selecting one of the radio buttons for bound albums 232, 3-ring albums 234 (including 1", 2", and 3" thick 3-ring albums) or 20-ring albums 236 (including 1" and 2" thick albums). Of course, many more size, background, and album type options can be presented to the user using various types displays, such as pull-down menus, scroll bars, and so forth The selected combination of album size, background, page numbers, and album type is then presented to the user. For example, if the user selects 8" x 10" double-sided album pages in a 3-ring, 2" thick binder with a marble texture background and a particular page number style, the internet server 42 presents to the user an image depicting this combination for the user to review.

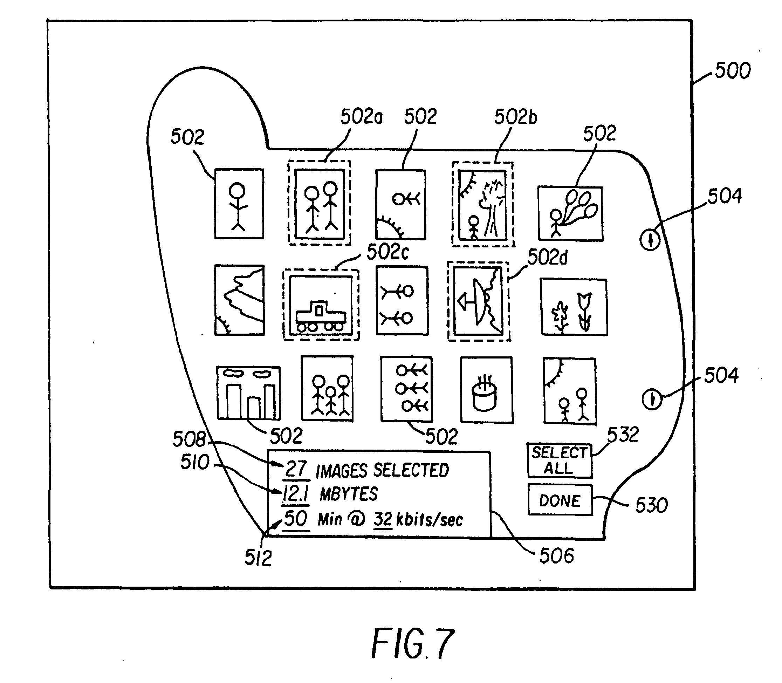

In block 106, the user selects at least one image to be used to create the image bearing product. In a preferred embodiment, the CPU 12 displays on the display monitor 14 a display screen 500 as shown in FIG. 7. The display screen 500 includes a two-dimensional array of thumbnail images 502 of images, and the user selects at least one image to be used to create the image bearing product. The user selects at least one image by clicking the mouse any number of thumbnail images 502. FIG. 7 shows that thumbnail image 502a (outlined) has been selected. In order to select desired images from a large number of thumbnail images 502, arrow controls 504 on the right portion of display screen 500 enable the user to scroll through the larger number of thumbnail images 502 to view a group of the thumbnail images 502 (for example, 15 thumbnail images) at a time. The user can then select additional images to be used to create an image bearing product by clicking the mouse 18 on any number of thumbnail images 502. The user can also use the select all icon 532 to select all of the images for uploading.

As the user selects images, an image data upload indicator 506 displays the number of images selected for uploading 508 (for example 27 images), as well as other information such as the total size of all of the selected files 510 (for example 12.1 Mbytes total for all selected images) and the estimated time for image uploading 512 (for example 50 minutes) given the data rate of the user's modem 22 (for example 32 kbit/sec average net upload speed).

Finally, the user clicks on the "done" icon 430. At this point, the user is presented with one or more display screens (not shown) depicting the final products to be delivered, and confirming the cost of the products. The user can then approve the order and log off of the Internet site.

In block 107, the service provider communicates the image size requirements for the image bearing product selected in block 105 to the home computer system 10. The home computer system 10 then automatically converts the image(s) selected in block 106 to provide the smaller sized digital image required to produce the image bearing product selected in block 105. For example, if the selected product is a mug, the printer which produces the image to be transferred to the mug can use 200 pixels per inch. To produce an image of 3" x 4.5" on the mug, the printer needs to print a digital image having 600 x 900 pixels. If the uploaded image has more that 600 x 900 pixels, the printer will need to decimate the image down to this size, meaning that some of the uploaded pixels are "wasted". Therefore, the best image size to be used for uploading for this particular image bearing product, and this particular size output image, is 600 x 900 pixels.

If, for example, the selected image file has a spatial resolution of 2000 pixels by 3000 pixels, the CPU motherboard 12 in the home computer system 10 is instructed to resize the image to 600 pixels by 900 pixels and then compress the image for transmission in a visually lossless manner for the mug image bearing product This resizing can use bi-cubic interpolation, or other resizing algorithms well known in the art. Since the output is an image transferred to a mug, the image quality needs are not high, compared for example to photographic prints, and a low bit depth such as 6 bits per pixel per color (18 bits RGB) may be used Alternatively, a larger number of bits may be used (for example 24 bits RGB), and the compression quantizer may be set to a level providing a higher compression ratio (lower quality). The home computer system 10 sets either the number of bits per pixel, or the compression level, or both, in accordance with the information provided by the fulfillment center 40 for each type of image bearing product selected by the user.

Continuing on to block 108 of FIG. 2, the selected images are uploaded from the home computer system 10 to the service provider. As the user selects images, an optional image data upload indicator 506 displays the number of images selected for uploading 508 (for example 27 images), as well as other information such as the total size of all of the selected files 510 (for example 12.1 Mbytes total for all selected images) and the estimated time for image uploading 512 (for example 50 minutes) given the data rate of the user's modem 22 (for example 32 kbit/sec average net upload speed).

In block 108, the digital images are uploaded to the service provider over the channel 36. The images may be uploaded at a more effective time (for example at night) rather than immediately after they are selected by the user. The uploaded images are stored at the fulfillment center 40 in the electronic database 44.

In block 109, the image identifiers corresponding to each of the customer's uploaded images, and the designated date indicating the date the image was uploaded, are added to the user's service account information. The image identifier can be the file name of the uploaded image. Alternatively, the image identifier can be a complete pathname specifying the storage device and the directory structure needed to locate each image in the electronic database 44.

Information describing the products selected by the user can be stored in the service account information depicted in FIGS. 5A & 5B. As shown in the example depicted in FIG. 5, the service account information includes the user name, password, user e-mail address, user shipping address, and billing information (lines 3-7). Some or all of this information may be encrypted for security reasons. The service account information can also include the shipping addresses for one or more designees (lines 9-11). This information is stored in the service account during block 105 described earlier.

The image list (lines 13-42 in FIGS. 5A & 5B) in the service account information provides a list of image identifiers (for example image names) and designated dates for each of the images that were uploaded from home computer system 10 to fulfillment center 40 and stored in electronic database 44 uploaded. The upload list provides a reference number (for example Image 1), an image name (for example DCP_0012.JPG) and an upload date (for example 14/01/1999 for January 14, 1999). The upload list also provides an image size (for example 720 x 1080 pixels). In the example of FIGS. 5A & 5B, a large number (more than 600) images have been uploaded, but only a few of the image list entries are shown. The image list information is stored in the service account during block 109 described earlier.

The service account information also provides information defining the products selected by the user. In the example of FIG. 5B, several products having different identifiers (ID) such as Product ID-1 (lines 45-57) which specifies a customized album, Product ID-2 (lines 59-66) which specifies a framed print, and Product ID-3 (lines 68-76) which specifies customized service prints. The album related information (lines 45-57) includes the album size/type style selected (line 47). It further includes the number of pictures per page selected by the user (line 48), which is 6 in the example of FIG. 5A, and the required image size (line 49 in FIG. 5B). To fit 6 images on each 8" x 10" page, the image size is 2.4" x 3.6". Since the color hardcopy printer 54 used to produce 8" x 10" album pages uses, in this example, 300 pixels per inch, the resolution requirement is 720 x 1080 pixels. The service account information also includes page number information, such as the style, font/color of the text, and the last page number printed (lines 51-54 in FIG. 5B). The last page number information is updated each time new album pages are printed. It can be used to automatically tell the user when an album has been filled, and a new album needs to be purchased. The album related information also includes a list of image numbers (line 23 in FIG. 5A) to be included in the album. These image numbers correspond to image identifiers listed in the Image list section (lines 13-42 in FIGS. 5A & 5B). Therefore, each of the uploaded images identified should have an uploaded image size of at least 720 x 1080 pixels. The album related information also indicates that designee #2 should receive the order (line 56 in FIG. 5B), and provides the order status (line 57 in FIG. 5B). The order status indicates that this image bearing product has been ordered by the user, but not yet fulfilled (for example not yet produced and shipped). Once fulfilled, the status will be updated to indicate that this order has been completed.

In an alternative embodiment, some album pages are produced which include one larger sized image (for example one 5" x 7" image) and several smaller sized images (for example several 2" x 3" images) on the same album page. In step 106, the user selects which of the images to be included in the album pages should be "featured" as larger size images. In step 107, these featured images are resized in a way that provides a larger size image file, relative to the images that will be printed using the smaller size. In this embodiment, the service account information includes more than one entry for the required image size, with each entry corresponding to the different size images which are used on the album pages, and the image numbers for each image size entry are separately identified. As a result, the images to be featured on the album page are uploaded using a relatively larger image size, compared to the other images used to produce the album pages.

The framed print information in FIG. 5B (lines 59-66) specifies the frame size/image size (line 61) and the required image size (line 62). Since the color hardcopy printer 54 used to produce 10" x 15" enlargements uses, in this example, 200 pixels per inch, the resolution requirement is 2000 x 3000 pixels. The frame style and color, and matte style are specified (line 63). The framed print information also includes a list of image numbers (line 64) to be used to produce the framed print. This image number (Image number 56) corresponds to the image identifier listed for image number 56 in the Image list section (line 20 in FIG. 5A), which is the image identified as DCP_00213.JPG. Note that this image has been uploaded using an image size of 2000 x 3000 pixels, which is much larger than the other image files, since it is to be used to produce an enlargement, as well being used to produce a small album page image. The information also indicates that designee #2 should receive the order (line 65 in FIG. 5B) and the order status (line 66 in FIG. 5B).

The service print information (lines 68-75 in FIG. 5B) specifies the print size (line 70 in FIG. 5B) as well as the required image size (line 71 in FIG. 5B). Since the color hardcopy printer 54 used to produce service prints uses, in this example, 300 pixels per inch, the resolution requirement is 1200 x 1800 pixels. The service print information also includes the print finish, and the location, font style, size, and color of the date to be overlaid in the print (lines 72-73 in FIG. 5B). It also includes a list of image numbers (line 73 in FIG. 5B) to be printed. Since Image 512 (line 34 in FIG 5A) through Image 515 (line 37 in FIG. 5A) are to be printed as 4" x 6" service prints as well as smaller images on album pages, these digital images are uploaded as 1200 x 1800 pixel size images (lines 34-37 in FIG. 5A). The service print information also indicates that designee # 1 should receive the prints (line 74 in FIG. 5B) and the order status (line 75 in FIG. 5B). The service print information could also specify other text or graphics selected by the user that should be added to the images when they are printed

The service account information is stored in electronic database 44. Alternatively, some or all of the service account information could instead stored on hard drive 20, or could be duplicated on hard drive 20 of home computer system 10.

In block 111, the user logs off the Internet site. Alternatively, the user may remain on the Internet site and immediately order additional image bearing products to be produced by the fulfillment center.

In block 123, the customer account provided in the service account information (FIGS. 5A & 5B) is billed for the order. The bill reflects the price of the image bearing products ordered by the customer. At this point, the financial institution having the customer's account designates such funds for transfer to the service provider.

In block 124, the production controller 52 produces the customized image bearing products using the uploaded images and the service account information (see FIGS. 5A & 5B) stored in electronic database 44. If the user has ordered an album, the uploaded digital images can be automatically arranged on the pages and printed by color hardcopy printer 54 to produce album pages 56. The last page number (line 54) in the service account information provided in FIG. 5 is updated to reflect the number of album pages that will be produced to complete the current order.

If the user has ordered framed prints, the digital images are printed using color hardcopy printer 54 to produce hardcopy prints 58. Each hardcopy print 58 includes the user selected matte border, for example the texture - wood grain border specified in line 63 of FIG. 5B. Each hardcopy print 58 is then framed using the appropriate frame 68, for example the classic - walnut frame specified in line 63 of FIG. 5B. If the user has ordered service prints, the digital images are printed using color hardcopy printer 54 to produce hardcopy prints 58. The hardcopy prints 58 use the size and finish specified in lines 70 and 72 of FIG. 5B. Before printing, each digital image is overlaid with the date stamp as specified in line 73 of FIG. 5B.

In block 126, the production controller 52 in FIG. 1 controls the shipping label printer 70 to produce the shipping label 74 using the shipping address of the customer or customer's designee provided in the service account information (see FIG. 5B). The shipping label 74 is attached to the shipping container 64 that is used to ship the image bearing product 66.

In block 128, the image bearing product 66 incorporating the uploaded digital images is delivered to the customer or the customer's designee. The term "delivery" means that the photo product 66 can be shipped to the customer or the customer's designee by the U.S. Postal Service (USPS) or by a carrier service, such as the United Parcel Service (UPS) or Federal Express. Alternatively, the image bearing product 66 can be delivered to a location such as a store, where the customer can pick it up. In this case, the billing provided in step 123 can be delayed until the customer picks up the photo product 66, and the customer can then pay for the photo product 66 using cash, check, or a charge/debit card.

## Claims

1. A method of selecting an image bearing product (66) that requires a particular resolution digital image, **characterized by**:
a) a user providing a high resolution digital image in a memory (20) at a first location (10);
b) a service provider (40) providing information which is displayed at the first location (10), such displayed information (400) including at least two different image bearing products (66) that can be provided by the service provider (40) that require at least two different resolution digital images;
c) the user selecting (105) one of the image bearing products (66) to be provided by the service provider (40) after viewing the displayed images;
d) the service provider (40) communicating (107) the resolution required for the selected image bearing product (66) to the first location (10);
e) responsive to the communicated required resolution, automatically converting (107) at the first location (10), the high resolution digital image to a lower resolution digital image corresponding to the selected image bearing product (66);
f) sending (108) the lower resolution digital image from the first location (10) to the service provider (40); and
g) utilizing (124) the lower resolution digital image to produce the selected image bearing product (66).

2. The method of claim 1 further including using a digital camera to capture the high resolution digital image.

3. The method of claim 1 wherein the at least two image bearing products (66) include prints of different sizes.

4. The method of claim 1 wherein the at least two image bearing products (66) are different photo albums.

5. The method of claim 1 further including the step of:
h) establishing a service account for the user with the service provider (40) to permit the user to have access to ordered services.

6. The method of claim 5 further including the step of:
i) providing payment for the selected photo product.

7. The method of claim 1 wherein the converting step further includes modifying the number of bits per pixel to produce the lower resolution digital image.

## Patentansprüche

1. Verfahren zum Auswählen eines bildtragenden Produkts (66), das ein digitales Bild mit besonderer Auflösung erfordert, **dadurch gekennzeichnet, dass**
a) ein Benutzer ein digitales Bild mit hoher Auflösung in einem Speicher (20) an einem ersten Ort (10) bereitstellt;
b) ein Service Provider (40) Informationen bereitstellt, die an dem ersten Ort (10) angezeigt werden, wobei diese angezeigten Informationen (400) mindestens zwei verschiedene bildtragende Produkte (66) enthalten, die vom Service Provider (40) bereitgestellt werden können und die mindestens zwei digitale Bilder mit unterschiedlicher Auflösung erfordern;
c) der Benutzer eines der bildtragenden Produkte (66) auswählt (105), die vom Service Provider (40) nach dem Betrachten der angezeigten Bilder bereitzustellen sind;
d) der Service Provider (40) die für das ausgewählte bildtragende Produkt (66) erforderliche Auflösung an den ersten Ort (10) überträgt (107);
e) in Abhängigkeit von der übertragenen erforderlichen Auflösung am ersten Ort (10) das digitale Bild mit hoher Auflösung automatisch umgewandelt (107) wird in ein digitales Bild mit geringerer Auflösung entsprechend dem ausgewählten bildtragenden Produkt (66);
f) das digitale Bild mit geringerer Auflösung vom ersten Ort (10) zum Service Provider (40) gesendet (108) wird; und
g) das digitale Bild mit geringerer Auflösung verwendet (124) wird, um ein ausgewähltes bildtragendes Produkt (66) zu erzeugen.

2. Verfahren nach Anspruch 1, mit dem Schritt des Verwendens einer digitalen Kamera zum Aufnehmen eines digitalen Bildes mit hoher Auflösung.

3. Verfahren nach Anspruch 1, worin die mindestens zwei bildtragenden Produkte (66) unterschiedlich große Abzüge umfassen.

4. Verfahren nach Anspruch 1, worin die mindestens zwei bildtragenden Produkte (66) unterschiedliche Fotoalben sind.

5. Verfahren nach Anspruch 1, das zudem folgenden Schritt umfasst:
h) Einrichten eines Kundenkontos beim Service Provider (40), durch das der Benutzer Zugriff auf die bestellten Dienstleistungen hat.

6. Verfahren nach Anspruch 5, das zudem folgenden Schritt umfasst:
i) Bereitstellen einer Zahlung für das ausgewählte Fotoprodukt.

7. Verfahren nach Anspruch 1, worin der Umwandlungsschritt das Modifizieren der Anzahl an Bits pro Pixel aufweist, um das digitale Bild mit geringerer Auflösung zu erzeugen.

## Revendications

1. Procédé pour sélectionner un produit portant une image (66) qui nécessite une image numérique de résolution particulière, **caractérisé par** :
a) l'enregistrement, par un utilisateur, d'une image numérique de haute résolution dans une mémoire (20) au niveau d'un premier site (10) ;
b) la fourniture, par un fournisseur de services (40), d'informations qui sont affichées au niveau du premier site (10), lesdites informations affichées (400) comprenant au moins deux produits différents portant une image (66) qui peuvent être fournis par le fournisseur de services (40) et qui nécessitent au moins deux images numériques de résolution différente ;
c) la sélection (105) par l'utilisateur de l'un des produits portant une image (66) devant être fournis par le fournisseur de services (40) après la visualisation des images affichées ;
d) la transmission (107), par le fournisseur de services (40), de la résolution requise pour le produit portant une image sélectionné (66) vers le premier site (10) ;
e) en réponse à la résolution requise transmise, la conversion automatique (107), au niveau du premier site (10), de l'image numérique de haute résolution en une image numérique de plus basse résolution correspondant au produit portant une image sélectionné (66) ;
f) l'envoi (108) de l'image numérique de plus basse résolution depuis le premier site (10) au fournisseur de services (40) ; et
g) l'utilisation (124) de l'image numérique de plus basse résolution pour produire le produit portant une image sélectionné (66).

2. Procédé selon la revendication 1, comprenant aussi l'utilisation d'un appareil photo numérique pour capturer l'image numérique de haute résolution.

3. Procédé selon la revendication 1, dans lequel les au moins deux produits portant une image (66) comprennent des épreuves de tailles différentes.

4. Procédé selon la revendication 1, dans lequel les au moins deux produits portant une image (66) sont des albums photo différents.

5. Procédé selon la revendication 1, comprenant aussi l'étape de :
h) création, avec le fournisseur de services (40), d'un compte de service pour l'utilisateur pour permettre à l'utilisateur d'accéder aux services commandés.

6. Procédé selon la revendication 5, comprenant aussi l'étape de :
i) paiement pour le produit photographique sélectionné.

7. Procédé selon la revendication 1, dans lequel l'étape de conversion comprend aussi la modification du nombre de bits par pixel pour produire l'image numérique de plus basse résolution.
